# EUROPEAN PATENT APPLICATION

(11) **EP 1 882 996 A2**
(43) Date of publication of application: **30.01.2008**
(21) Application number: 07112982.9
(22) Date of filing: 24.07.2007
(51) Int. Cl.: G05B 19/00, G06F 11/00, H04L 12/40, H04L 12/403

(54) **Redundancy coupler for industrial communications networks**

(30) Priority: 28.07.2006 US 460795
(71) Applicant: GE Fanuc Automation Americas, Inc., Charlottesville, VA 22911 (US)
(72) Inventor: Elliott, David Charles, Ruckersville, VA 22968 (US); Hewlett Elliott, Catherine Mary, Ruckersville, VA 22968 (US); Lankford, Jr. Carson Ward, Charlottesville, VA 22901 (US); Talley, Dean Stewart, Barboursville, VA 22923 (US)
(74) Representative: Illingworth-Law, William Illingworth

(57) **Abstract**

A redundancy coupler (10) configured to couple a plurality of redundant master controllers (MCs) (12, 14) to a fieldbus (16) also having at least one slave device (18, 20) communicatively coupled thereto is provided. The redundancy coupler further configured to determine which of the plurality of redundant MCs is active, receive communications from the active MC and to forward the communications from the active MC to the at least one slave device via the fieldbus, and receive communications from the other redundant MCs and to prevent the communications from the other redundant MCs from being forwarded to the at least one slave device.

## Description

### BACKGROUND OF THE INVENTION

This invention relates generally to industrial communications networks, and more particularly to providing hot standby capabilities to such networks.

The "fieldbus" network is an industrial, multidrop digital communications network that uses a serial bus and is bidirectional. Fieldbus networks are commonly used to link isolated devices in an industrial setting. These devices may include controllers, transducers, sensors, and actuators. Some computing power is provided to each field device so that these devices can perform certain control and maintenance functions in addition to providing communications. The fieldbus is now covered by international standards.

The PROFIBUS® system is a type of fieldbus system that allows high speed digital communication between computers and PLCs using an enhanced RS485 wiring technology. It is used in factory and process automation in industrial automation, process control, and factory integration and can serve the needs of large installations. PROFIBUS systems operate in a manner similar to an asynchronous token bus. Master-slave communication relationships are defined.

Although multiple masters are allowed, the outputs of any PROFIBUS or fieldbus device can be assigned to only one master. Thus, the failure of a single master in such networks results in the loss of control of and the inability to obtain data from one or more PROFIBUS or fieldbus devices.

### BRIEF DESCRIPTION OF THE INVENTION

In one aspect, the present invention provides a method for providing a hot standby master on a fieldbus. The method includes communicatively coupling a redundancy coupler to a fieldbus having at least one slave device communicatively coupled thereto. The method further includes communicatively coupling a plurality of redundant fieldbus master controllers (MCs) to the coupler and utilizing the coupler to determine which of the plurality of redundant MCs is active. Also included in the method is using the coupler to receive communications from the active MC and to forward the received communications from the active MC to the one or more slave devices via the fieldbus. In addition, the coupler is used to receive communications from the other redundant MCs and to prevent the received communications from the redundant MCs from being forwarded to the one or more slave devices.

In another aspect, the present invention provides a redundancy coupler configured to couple a plurality of redundant master controllers (MCs) to a fieldbus also having at least one slave device communicatively coupled thereto. The coupler is also configured to determine which of the plurality of redundant MCs is active, to receive communications from the active MC and to forward communications from the active MC to the one or more slave devices via the fieldbus. Also, the coupler is configured to receive communications from the other redundant MCs and to prevent communications from the other redundant MCs from being forwarded to the one or more slave devices.

In yet another aspect, the present invention provides a communication system that includes a fieldbus, at least one slave device communicatively coupled to fieldbus, a redundancy coupler communicatively coupled to the fieldbus, and a plurality of redundant master controllers (MCs) communicatively coupled to the slave devices via the redundancy coupler and the fieldbus. The coupler is configured to couple the plurality of redundant MCs to the fieldbus. The coupler is also configured to determine which of the plurality of redundant MCs is active and to receive communications from the active and to forward the communications from the active MC to the one or more slave devices via the fieldbus. The redundancy coupler is also configured to receive communications from the other redundant MCs and to prevent the communications from the other redundant MCs from being forwarded to the one or more slave devices.

It will be appreciated that configurations of the present invention make it possible to provide redundant master controllers on fieldbus or PROFIBUS, and allows each master controller other than the active master controller to be in a hot standby state.

### BRIEF DESCRIPTION OF THE DRAWINGS

Embodiments of the present invention will now be described, by way of example only, with reference to the accompanying drawings, in which:
Figure 1 is a block diagram of a first example configuration of a fieldbus network incorporating a redundancy coupler.
Figure 2 is a block diagram of a second example configuration of a fieldbus network incorporating a redundancy coupler having an included master controller.
Figure 3 is a block diagram of a third example configuration of a fieldbus network incorporating two redundancy couplers.

### DETAILED DESCRIPTION OF THE INVENTION

As used herein, an element or step recited in the singular and proceeded with the word "a" or "an" should be understood as not excluding plural said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

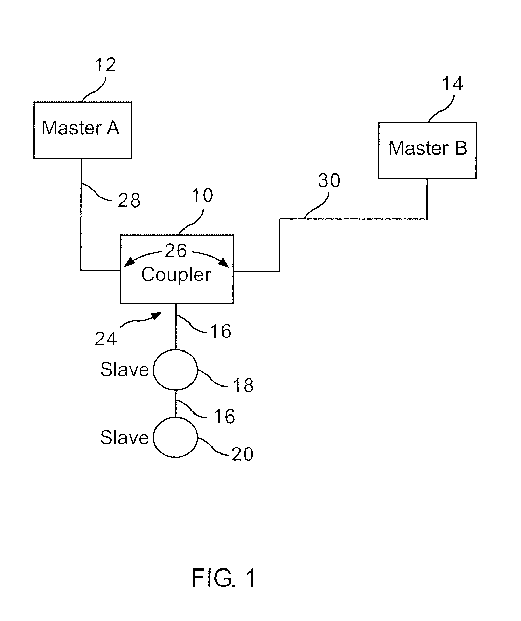

In some configurations and referring to Figure 1, a PROFIBUS (or fieldbus) redundancy coupler 10 is a device that can couple at least two PROFIBUS (or fieldbus) master controllers (MCs) 12, 14 into a single output PROFIBUS (or fieldbus) bus 16 wherein one master is a preferred master 12 and the other master(s) is (are) operated as hot backup(s) 14. Redundancy coupler 10 allows both masters 12, 14 to see all input control data and diagnostics from slave devices 18, 20, located on the slave bus side 24 of redundancy coupler 10 from MCs 12, 14 while allowing output control data from only active MC 12 to be transferred to slave devices 18, 20. MCs 12, 14 are located on a master bus side 26 of redundancy coupler 10 from slave bus 16. Redundancy coupler 10 is transparent to MCs 12, 14 in that each MC 12, 14 accesses each slave device 18, 20 individually as though slave devices 18, 20 were connected to a local bus of that MC. Therefore, in the exemplary embodiment, each master 12, 14 is able to access 244 bytes of input and/or output data on each slave device 18, 20 connected to a shared PROFIBUS bus or fieldbus 16. Alternatively, each master 12, 14 is able to access more or less than 244 bytes of input and/or output data on each slave device 18,20. In another embodiment, the present invention may be utilized with fieldbusses other than PROFIBUS busses.

In the event of a failure of fieldbus or PROFIBUS bus 28 of active MC 12, redundancy coupler 10 bumplessly switches to backup MC 14 for output data.

Thus, many configurations of the present invention utilize two separate PROFIBUS busses (or fieldbusses) 28, 30 as master busses, each with a corresponding type 1 master 12, 14, respectively. Alternatively, the present invention may be utilized with fieldbusses other than PROFIBUS busses. Each of bus 28, 30 is referred to herein as a "master bus." Both type 1 master devices 12, 14 attempt to control or "own" all of PROFIBUS slave devices 18, 20 that are connected to a third bus 16, referred to herein as a "slave bus." Redundancy coupler 10 is the only device that is attached to all three busses 16, 28, 30. Redundancy coupler 10 is configured to provide the necessary signals so that both MCs 12, 14 act as though they are in control of slave device 18, 20, i.e., each master 12, 14 gets input data, diagnostic data, etc. provided by each PROFIBUS or fieldbus device 18, 20 attached to slave bus 16. Some configurations of the present invention do not require either PROFIBUS master 12, 14 to be aware of or support this type of redundancy other than, in some configurations, configuring redundancy coupler 10. Further, PROFIBUS devices 18, 20 attached to slave bus 16 similarly are not required to be redundancy-aware in some configurations of the present invention.

In some configurations, redundancy coupler 10 is configured to select one of the two master busses 28, 30 as a "preferred" bus. Outputs specified on the preferred bus (e.g., 28) are forwarded to slave bus 16 as long as they are received error-free and in a timely manner. If these conditions are not satisfied or cease being satisfied, redundancy coupler 10 then uses the outputs provided by MC 14 that is on the non-preferred (or "alternate") bus 30.

The PROFIBUS specification includes commands other than those that provide inputs and outputs that must be supported on both busses 28, 30 for PROFIBUS master devices 12, 14 to operate as desired. These additional commands are needed to enable master devices 12, 14 to act as though they are controlling devices 18, 20 on slave bus 16, and thus, scan devices 18, 20 on slave bus 16 to set the outputs and read the inputs of devices 18, 20 on slave bus 16, etc. In some configurations of the present invention, a minimum acceptable set of commands is defined by the mandatory requirements of a "DP-V0" slave, which are:

### Request/Response.

I/O Data Exchange. (This command is used by a master 12 to support a cyclic exchange of outputs and inputs between master 12 and a slave 18. If slave device 18 does not receive this request regularly, i.e., the watchdog timer in slave device 18 times out, slave device 18 independently sets its outputs to default values.)

Set Parameters. (This command is used by a master 12 to send Lock/Unlock requests, Sync/Freeze requests, Bus-specific configuration information, e.g. Slave Watchdog time, Min Response delay time, and Device-specific parameters.)

Check Configuration. (This command is used by a master 12 to verify that the configuration information it has for a given slave device 18 matches what that slave device expects, e.g. the amount of I/O, etc.)

Read Slave Diagnostics. (This command is used by a master 12 to verify the presence of a device 18, as well as to check on the status and health of the device 18, including channel-specific faults such as "short circuit," "line break," etc.)

Global Control. (This command is used by a master 12 to send special control commands to one. i.e., single or several, i.e., multicast, DP-Slaves 18, 20.)

To simplify the problem, additional restrictions can be imposed in some configurations of the present invention. For example, some configurations need not support the complications introduced by Freeze or Sync commands, and some of these configurations therefore are not required to support the "Global Control" request at all.

Configurations of the present invention can be further simplified, although in some cases, enforcement of restrictions on their operation may have to be made a responsibility of a user rather than a manufacturer. For example, some configurations of the present invention use one or more of the following simplifications:
1. Require that masters 14 being used for redundancy have the same PROFIBUS addresses. This simplification is practical because each master 12, 14 is on a different bus 28, 30. Thus, redundancy couplers 10 can be configured to pass packets unmodified, and it can be guaranteed that the slave devices 18, 20 will neither ignore the packets nor change ownership, which would result in a "bump" in the outputs of slave devices 18, 20. This simplification also permits the pass through of "Set Parameters" commands from masters 12, 14 on both busses 28, 30.
2. For slave devices 18, 20 that are shared by both redundant masters 12, 14, require redundant masters 12, 14 to have exactly the same parameter data for each device 18, 20.
3. For slave devices 18, 20 that are shared by both redundant masters 12, 14, require redundant masters 12, 14 to have exactly the same configuration.

A typical sequence of requests that is used by an MC 12 to begin performing I/O data transfers with a given PROFIBUS slave device 18 is:
1. ReadSlaveDiags is requested until slave device 18 responds. The response data is checked to see if another MC 14 "owns" slave device 18. If not, then MC 12 proceeds with the following steps.
2. SetParameters is used to attempt by master 12 to become the "owner" of device 18. SetParameters also provides some configuration of device 18, by setting some parameter or parameters such as watchdog timeout value, required response delay, etc.
3. CheckConfig is used by MC 12 to supply configuration data for slave device 18. Slave device 18 verifies that the configuration supplied by MC 12 matches its actual, real configuration for format, length, and I/O areas. CheckConfig also ensures either that master 12 has a "Consistency" flag set to a supported value, or that master 12 will indicate a configuration fault in the slave diagnostics when these diagnostics are next retrieved.
4. ReadSlaveDiags provides results that are used to verify that master 12 is now the "owner" of device 18, to check for parameterization and configuration faults, and to wait for slave device 18 to indicate that it is "Ready." If MC 12 is determined to be the "owner" and no parm/config errors have occurred, this request is repeated until slave device 18 becomes "ready."
5. IODataExchange is used by MC 12 to specify outputs for slave device 18, in addition to indicating the own operation mode of master 12. Slave device 18 replies with its inputs, as well as an indication of whether or not it has any diagnostic messages or errors to report. If diagnostic messages or errors are indicated, MC 12 can issue a separate "ReadSlaveDiags" request to get them.

Thus, configurations that support at least the transfer of I/O data support all of these requests and responses.

### Example 1.

Some configurations of the present invention include custom firmware, which may, for example, be embedded in a field programmable gate array (FPGA) in redundancy coupler 10 to support 3 ports at 12Mbps. The custom firmware supports PROFIBUS level 2 protocol as required by redundancy coupler 10.

Hardware for these configurations is configured such that the level 1 protocol (i.e. physical media) is handled by commercially available hardware (e.g. RS-485 Transceivers that support PROFIBUS-DP, such as Analog Devices ADM-2486 or Texas Instruments SN65HVD1176).

Reduced support of level 2 protocol is provided than that provided by a conventional full PROFIBUS Level 2 stack. More specifically, in some configurations, this limited support merely determines the type of each PROFIBUS request or response. In accordance with the determined type, the limited support provided that the PROFIBUS request or response is either:
1. Passed on unmodified to the appropriate bus;
2. Analyzed to extract and buffer data contained in the request or response (e.g., data such as output values or diagnostic values is/are extracted and buffered in some configurations). The buffering occurs in an area reserved for the requesting or responding device, in accordance with either source or destination address, as appropriate. The data is then passed on unmodified to the appropriate bus; or
3. Replied to directly, using data that was previously buffered (e.g. for I/O Data Transfer requests from the "Alternate Master Bus" when the "Preferred Master Bus" is still functioning or being listened to).

Some example 1 configurations also provide sequencing of requests from two or more master busses 28, 30 so that only one PROFIBUS request is ever outstanding on slave bus 16 at any one time. Also, some of these configurations determine which master bus 28, 30 is controlling outputs of the devices 18, 20 on slave bus 16.

Further simplification of these configurations is possible by disallowing any master devices 12, 14 on slave bus 16. This further simplification makes support master-to-master communication (including token passing) through a redundancy coupler unnecessary.

| Request | Redundancy Coupler Behavior (for Example 1) |
|---|---|
| I/O Data Exchange (from active bus, whether or not it is the "preferred" bus) | If this is the "Preferred" bus, kick the bus-switchover watchdog timer (assuming no CRC error). |
| | Put the request on the Slave Bus, unmodified. |
| | If a response comes back from the Slave Bus, determine success/fail status. |
| | If success, copy the Input data into a "save area," using Source Address as an index. (Some configurations copy the entire response.) |
| | If failure, save the failure code/indication. (Some configurations copy the entire response.) |
| | Put the response on the active bus, unmodified. |
| I/O Data Exchange (from inactive bus, whether or not it is the "alternate" bus) | If this is the "preferred" bus, then the redundancy coupler has previously switched to the alternate bus. The redundancy coupler begins the process of switching back. However, this switch may need to occur at some controlled time. Therefore, variables are set as required to indicate the preferred bus is coming back online. |
| | Extract the Destination Address. |
| | Copy (or reconstruct, if needed) the most recent response that the redundancy controller recorded for an I/O Data Exchange to the at the destination address from the Active Bus. (The redundancy coupler does not inform the "inactive" master that a given device is "ready" until the given device has been scanned by the master on the active bus at least once to ensure that the redundancy coupler will have input data to provide.) |
| | Put the response on the inactive bus. |
| Set Parameters | In some configurations, pass through unmodified. In these configurations, it is assumed that the redundancy controller can call Set Parameters any number of times, and at any given time, from the same master address without causing glitches on the outputs (assuming the parameter data is exactly the same). This assumption may not be valid for all configurations, particularly if the configuration includes devices with device-specific parameters that have device-specific meaning. |
| | OR |
| | In other configurations, pass through unmodified from the "active" bus, but record the parameter data indexed by destination address. When a similar request comes from the "inactive" bus, compare the data and if it matches exactly, return success (and otherwise return failure). Because the "alternate" bus waits until the "preferred" bus has done an I/O scan before reporting "ready" on the ReadSlaveDiags request, the "preferred" bus will have done this as well (unless there has been a switchover timeout before then). |
| Check Config | In some configurations, pass through unmodified. In these configurations, it is assumed that the redundancy controller can call Set Parameters any number of times, and at any given time, from the same master address without causing glitches on the outputs (assuming the parameter data is exactly the same). This assumption may not be valid for all configurations, particularly if the configuration includes devices with device-specific parameters that have device-specific meaning. |
| | OR |
| | Pass through unmodified from the "Active" bus, but record the configuration data (indexed by destination address). When a similar request comes from the "inactive" bus, compare the data and if it matches exactly, return success (and otherwise return failure). Because the "alternate" bus waits until the "preferred" bus has done an I/O scan before reporting "ready" on the ReadSlaveDiags request, the "preferred" bus will have done this as well (unless there has been a switchover timeout before then). |
| Read Slave Diags | In some configurations, pass through unmodified. |
| | The redundancy coupler reports "Not Ready" to the alternate bus until the preferred bus has completed at least one "I/O Data Exchange" so that there are valid input values to supply to prevent the switchover timeout from expiring. Alternatively, in some configurations in which all slave device "defaults" are zero, the redundancy coupler performs a scan specifying zeros for all the output values (if needed to support an "I/O Data Exchange" from the alternate bus before the preferred bus does a scan). |
| | In configurations in which the "Diag" bits are cleared after they have been read, the redundancy coupler snoops the response and constructs and manages a set of diagnostics values to supply to the alternate bus. Some configurations manage such bits for both busses, so that regardless of which bus makes this request, that bus gets the most up-to-date diagnostics without "missing" any that were first read by the other bus. |
| Global Control | Not supported at all in some configurations. |
| | OR |
| | Passed through unmodified in some other configurations. |
| | In configurations in which Freeze/Sync is not supported, the only command for which support is needed here is "Clear All." |
| | Whatever is done for the Global Control command, consideration should be given to the conditions under which switchover from the "alternate" bus back to the "preferred" bus occurs. For example, if the "preferred" bus is sending a "SetParameters" request with different data than the currently effective operational data, and the simplifying restrictions are enforced, ideally, the redundancy coupler should NACK the request. |

### Example 2.

In configurations exemplified by Example 2, the number of devices that are supported behind a single redundancy coupler is restricted. For example, some configurations allow only eight devices. (The number of devices differs in other configurations.) Each master bus is configured with repeater circuitry to limit the electrical load on those busses. N PROFIBUS slave chips are on a downstream side of each repeater. Each slave chip is used as a proxy for one of the slave devices connected to the "slave bus."

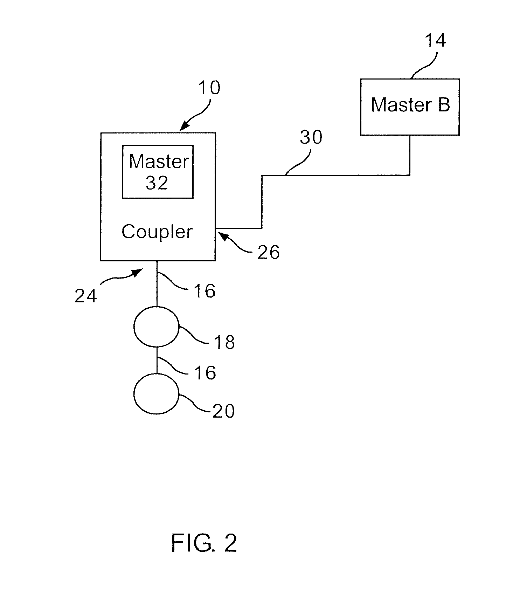

In these configurations and referring to Figure 2, redundancy coupler 10 includes a PROFIBUS type 1 master 32 that is used to own and/or control devices 18, 20 on slave bus 16. In some of these configurations, a user configures redundancy coupler 10 by providing data specifying which slave devices 18, 20 are attached. In some others of these configurations, redundancy coupler 10 "snoops" the "Check Config" command and/or result to determine what configuration it should use for any given device 18, 20. To facilitate snooping for a PROFIBUS master 32 embedded in redundancy coupler 10, it must be possible to add slave device 18, 20 configurations to it without disrupting the PROFIBUS bus or fieldbus 16 that it is attached to or scanning.

Configurations consistent with Example 2 can support I/O data exchange by buffering the outputs for each slave device 18, 20 that have been provided by each master bus 28, 30. During a slave bus 16 cycle, embedded master 32 retrieves the outputs from the buffer of the "active" master bus 28 and sends these outputs to the devices 18, 20 on slave bus 16. Similarly, embedded master 32 buffers the input values that are returned by each device 18, 20 on slave bus 16. During a master bus cycle, redundancy coupler 10 saves the outputs from the buffer of active master bus 28 (shown in Figure 1) for use by its embedded master 32, and returns the most up-to-date set of inputs for that device.

### Example 3.

Configurations of the invention consistent with this example are similar to those consistent with Example 2 except that, in Example 3 configurations, modification of a PROFIBUS stack IP core are made that is then placed in a field programmable gate array (FPGA).

An IP Core for the PROFIBUS protocol stack is modified it so that it will respond to multiple slave device addresses. This modified IP Core provides different I/O data, diagnostic data, etc. for each such device address, so some configurations contain multiple instances of the full PROFIBUS stack, namely, one per device supported on the "slave bus."

Thus, in some configurations of the present invention and referring to Figures 1, 2, and 3, a method for providing a hot standby master 14 on a fieldbus 30 is provided. The method includes communicatively coupling a coupler 10 to a fieldbus 16 having at least one slave device 18, 20 communicatively coupled thereto. The method further includes communicatively coupling a plurality of redundant fieldbus master controllers (MCs) 12, 14 to coupler 10 and utilizing coupler 10 to determine which of the plurality of redundant MCs 12, 14 is active. Also included in the method is using coupler 10 to receive communications from the active MC 12 and to forward the received communications from active MC 12 to the one or more slave devices 18, 20 via fieldbus 16. In addition, coupler 10 is used to receive communications from the other redundant MCs 14 and to prevent the received communications from redundant MCs 14 from being forwarded to the one or more slave devices 18, 20.

Some configurations further include using coupler 10 to receive communications from the one or more slave devices 18, 20 and forwarding communications from the slave devices 18, 20 to the plurality of redundant MCs 12, 14.

Also, in some configurations of the present invention, redundant masters 12, 14 have the same address on fieldbus 16, and in some of these configurations, fieldbus 16 is a PROFIBUS bus. In addition, various configurations of the present invention include forwarding received communications from active MC 12 to the one or more slave devices 18, 20 via fieldbus 16 as unmodified packets. Some configurations also load each redundant master 14 with the same parameter data for each of the one or more slave devices 18, 20. Also in some configurations, for each of the one or more slave devices 18, 20 sharing the plurality of redundant masters 12, 14, each of shared redundant masters 12, 14 has the same configuration. Also, in some configurations of the present invention in which fieldbus 16 is a PROFIBUS, only limited support for PROFIBUS requests and responses is provided. In particular, each PROFIBUS request or response is either a) passed on unmodified; b) analyzed to extract and buffer data contained in the request or response and then passed on unmodified; or c) replied to directly, using data that was previously buffer.

Some configurations of the present invention provide a redundancy coupler 10 configured to couple a plurality of redundant master controllers (MCs) 12, 14 to a fieldbus 16 also having at least one slave device 18, 20 communicatively coupled thereto. Coupler 10 is also configured to determine which of the plurality of redundant MCs 12, 14 is active, to receive communications from active MC 12 and to forward communications from active MC 12 to the one or more slave device 18, 20 via fieldbus 16. Also, coupler 10 is configured to receive communications from the other redundant MCs 14 and to prevent communications from the other redundant MCs 14 from being forwarded to the one or more slave devices 18, 20. Some configurations are further configured to receive communications from the one or more slave devices 18, 20 and to forward communications from the one or more slave devices 18, 20 to the plurality of redundant MCs 12, 14.

In some configurations, redundancy coupler 10 is configured to couple to a PROFIBUS bus 16. Also, in some configurations, redundancy coupler 10 is configured to forward communications from active MC 12 to the one or more slave devices 18, 20 via fieldbus 16 as unmodified packets. In some configurations, redundancy coupler 10 is not only configured to couple to a PROFIBUS bus 16 but is also configured to provide only limited support for PROFIBUS requests and responses. Namely, each PROFIBUS request or response is either: a) passed on unmodified by coupler 10; b) analyzed to extract and buffer data contained in the request or response and then passed on unmodified by coupler 10; or c) replied to directly, using data that was previously buffer by coupler 10. Some configurations of redundancy couplers 10 further comprise a PROFIBUS type 1 master 32 configured to control devices on a slave bus.

Also, some configurations of the present invention provide a communication system that comprises a fieldbus 16, at least one slave device 18, 20 communicatively coupled to fieldbus 16, a redundancy coupler 10 communicatively coupled to fieldbus 16, and a plurality of redundant master controllers (MCs) 12, 14 communicatively coupled to slave devices 18, 20 via redundancy coupler 10 and fieldbus 16. Coupler 10 is configured to couple the plurality of redundant MCs 12, 14 to fieldbus 16. Coupler 10 is also configured to determine which of the plurality of redundant MCs 12, 14 is active and to receive communications from active MC 12 and to forward the communications from active MC 12 to the one or more slave devices 18, 20 via fieldbus 16. Redundancy coupler 10 is also configured to receive communications from the other redundant MCs 14 and to prevent the communications from the other redundant MCs 14 from being forwarded to the one or more slave devices 18, 20.

In some network configurations, redundancy coupler 10 is also configured to receive communications from the one or more slave devices 18, 20 and to forward communications from the one or more slave devices 18, 20 to the plurality of redundant MCs 12, 14. Also in some configurations, the fieldbus is a PROFIBUS bus 16. Coupler 10 can be configured to forward communications from active MC 12 to the one or more slave device 18, 20 via fieldbus 16 as unmodified packets.

In some network configurations, the fieldbus is a PROFIBUS bus 16 and coupler 10 provides only limited support for PROFIBUS requests and responses. In particular, each PROFIBUS request or response is either a) passed on unmodified by coupler 10; b) analyzed to extract and buffer data contained in the request or response and then passed on unmodified by coupler 10; or c) replied to directly, using data that was previously buffered by coupler 10.

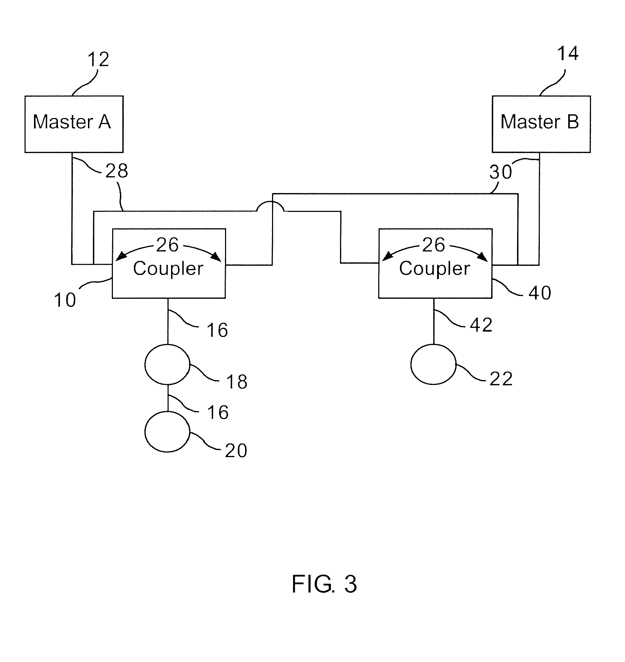

In some configurations of the present invention and referring to Figure 3, more than one coupler 10, 40 is provided. In one such configuration, coupler 40 is used with MCs 12, 14 to provide redundancy for an additional bus 42 that has one or more slave devices 22 coupled to it. For example, MC 12 is the active master for bus 16 and MC 14 is the hot standby. However, coupler 40 provides that MC 14 serves as the active master for an additional bus 42 and MC 12 serves as the hot standby for additional bus 42.

It will thus be appreciated that configurations of the present invention make it possible to provide redundant master controllers on fieldbus or PROFIBUS, and allows each master controller other than the active master controller to be in a hot standby state. More particularly, configurations of the present invention provide one or more of the following advantages:
1. Non-redundant capable slave devices can be used in a redundant master configuration.
2. Master devices do not have to coordinate with each other to determine which is active. The coupler is able to decide and gives preference to the preferred master.
3. Both masters see all input and diagnostic data from the slave devices. The slave devices see only output data from the active master.
4. The coupler can be placed in front of each device or a series of devices so an application designer can tailor the level of fault tolerance.
5. The coupler is transparent to the fieldbus master and slave devices.

While the invention has been described in terms of various specific embodiments, those skilled in the art will recognize that the invention can be practiced with modification within the spirit and scope of the claims.

## Claims

1. A redundancy coupler (10) configured to couple a plurality of redundant master controllers (MCs) (12, 14) to a fieldbus (16) also having at least one slave device (18, 20) communicatively coupled thereto, said redundancy coupler further configured to:
determine which of the plurality of redundant MCs is active;
receive communications from the active MC and to forward said communications from the active MC to the at least one slave device via the fieldbus; and
receive communications from the other redundant MCs and to prevent said communications from the other redundant MCs from being forwarded to the at least one slave device.

2. A redundancy coupler (10) in accordance with Claim 1 further configured to receive communications from the at least one slave device (18, 20) and to forward communications from the at least one slave device to the plurality of redundant MCs (12, 14).

3. A redundancy coupler (10) in accordance with Claim 1 configured to couple to a PROFIBUS bus (28, 30).

4. A redundancy coupler (10) in accordance with Claim 1 wherein said redundancy coupler is configured to forward communications from the active MC (12, 14) to the at least one slave device (18, 20) via the fieldbus (16) as unmodified packets.

5. A redundancy coupler (10) in accordance with Claim 1 configured to couple to a PROFIBUS bus (28, 30) and further comprising providing only limited support for PROFIBUS requests and responses, wherein each PROFIBUS request or response is either:
a) passed on unmodified by the redundancy coupler;
b) analyzed to extract and buffer data contained in the request or response and then passed on unmodified by the redundancy coupler; or
c) replied to directly, using data that was previously buffered by the redundancy coupler.

6. A redundancy coupler (10) in accordance with Claim 1 further comprising a PROFIBUS type 1 master controller (32) configured to control devices (18, 20) on a slave bus (16).

7. A communication system comprising:
a fieldbus (16);
at least one slave device (18, 20) communicatively coupled to the fieldbus;
a redundancy coupler (10) communicatively coupled to the fieldbus;
a plurality of redundant master controllers (MCs) (12, 14) communicatively coupled to the slave devices via said redundancy coupler and said fieldbus; and
said coupler configured to couple said plurality of redundant MCs to said fieldbus, said coupler further configured to:
determine which of the plurality of redundant MCs is active;
receive communications from the active MC and to forward said communications from the active MC to the at least one slave device via the fieldbus; and
receive communications from the other redundant MCs and to prevent said communications from the other redundant MCs from being forwarded to the at least one slave device.

8. A network in accordance with Claim 7 wherein said redundancy coupler (10) further configured to receive communications from the at least one slave (18, 20) and to forward communications from the at least one slave device to the plurality of redundant MCs (12, 14).

9. A network in accordance with Claim 7 wherein said fieldbus (16) is a PROFIBUS bus.

10. A network in accordance with Claim 7 wherein said redundancy coupler (10) is configured to forward communications from the active MC (12, 14) to the at least one slave device (18, 20) via the fieldbus (16) as unmodified packets.
